# EUROPEAN PATENT APPLICATION

(11) **EP 3 879 896 A1**
(43) Date of publication of application: **15.09.2021**
(21) Application number: 19881613.4
(22) Date of filing: 01.11.2019
(51) Int. Cl.: H04W 72/04, H04W 76/10, H04W 80/08

(54) **TERMINAL DEVICE, BASE STATION DEVICE, AND METHOD**

(30) Priority: 06.11.2018 JP 2018208714
(71) Applicant: Sharp Kabushiki Kaisha, Sakai-shi Osaka 590-8522 (JP); FG Innovation Company Limited, Hong Kong (CN)
(72) Inventor: HORI, Takako, Sakai City, Osaka 590-8522 (JP); YAMADA, Shohei, Sakai City, Osaka 590-8522 (JP); TSUBOI, Hidekazu, Sakai City, Osaka 590-8522 (JP)
(74) Representative: Müller Hoffmann & Partner
(86) International application number: PCT/JP2019/043048
(87) International publication number: WO 2020/095838

(57) **Abstract**

The present invention provides technologies related to a terminal apparatus, a base station apparatus, a method, and an integrated circuit, with which the complexity of protocol processing can be reduced, and communication can be performed efficiently. A terminal apparatus includes: a reception unit configured to receive an RRC reconfiguration message including a radio bearer configuration from a base station apparatus; and a processing unit configured to notify a higher layer that a user-plane resource for a PDU session has been configured when a DRB for a PDU session did not exist before the RRC reconfiguration message is received in a case that a value of a radio bearer identifier included in the radio bearer configuration does not exist in the configuration and that the radio bearer configuration includes an SDAP configuration.

## Description

### CROSS-REFERENCE TO RELATED APPLICATION

The present application claims priority based on Japanese Patent Application No. 2018-208714 filed on Nov. 6, 2018, the content of which is incorporated herein by reference.

### FIELD

The present invention relates to a terminal apparatus, a base station apparatus, and a method therefor.

### BACKGROUND

A radio access scheme, a radio network for cellular mobile communication (hereinafter, referred to as "Long Term Evolution (LTE: a registered trademark)" or "Evolved Universal Terrestrial Radio Access: EUTRA"), and a core network (hereinafter, referred to as Evolved Packet Core: EPC) are being studied in the 3rd Generation Partnership Project (3 GPP).

Furthermore, as a radio access scheme and a radio network technology for a 5th generation cellular system, technical studies and standardization for LTE-Advanced Pro, which is an enhanced technology of LTE, and New Radio technology (NR), which is a new radio access technology, have been conducted by the 3GPP (NPL 1). Furthermore, a 5th Generation Core Network (5GC), which is a core network for a 5th generation cellular system, has also been studied (NPL 2).

### Prior Art Literature

### Non-Patent Literature

NPL 1: 3GPP RP-170855, "Work Item on New Radio (NR) Access Technology"
NPL 2: 3GPP TS 23.501 v15.3.0, "System Architecture for the 5G System; Stage 2"
NPL 3: 3GPP TS 36.300 v15.3.0, "Evolved Universal Terestrial Radio Access (E-UTRA) and Evolved Universal Terestrial Radio Access Network (E-UTRAN); Overview Description; Stage 2"
NPL 4: 3GPP TS 36.331 v15.3.0, "Evolved Universal Terestrial Radio Access (E-UTRA); Radio Resource Control (RRC); Protocol specifications"
NPL 5: 3GPP TS 36.323 v15.1.0, "Evolved Universal Terestrial Radio Access (E-UTRA); Packet Data Convergence Protocol (PDCP) specification"
NPL 6: 3GPP TS 36.322 v15.1.0, "Evolved Universal Terestrial Radio Access (E-UTRA); Radio Link Control (RLC) protocol specification"
NPL 7: 3GPP TS 36.321 v15.3.0, "Evolved Universal Terestrial Radio Access (E-UTRA); Medium Access Control (MAC) protocol specification"
NPL 8: 3GPP TS 37.340 v15.3.0, "Evolved Universal Terestrial Radio Access (E-UTRA) and NR; Multi-Connectivity; Stage 2"
NPL 9: 3GPP TS 38.300 v15.3.1, "NR; NR and NG-RAN Overview Description; Stage 2"
NPL 10: 3GPP TS 38.331 v15.3.0, "NR; Radio Resource Control (RRC); Protocol specifications"
NPL 11: 3GPP TS 38.323 v15.3.0, "NR; Packet Data Convergence Protocol (PDCP) specification"
NPL 12: 3GPP TS 38.322 v15.3.0, "NR; Radio Link Control (RLC) protocol specification"
NPL 13: 3GPP TS 38.321 v15.3.0, "NR; Medium Access Control (MAC) protocol specification"
NPL 14: 3GPP TS 23.401 v14.3.0, "General Packet Radio Service (GPRS) enhancements for Evolved Universal Terrestrial Radio Access Network (E-UTRAN) access"
NPL 15: 3GPP TS 23.502 v15.3.0, "Procedure for 5G System; Stage 2"
NPL 16: 3GPP TS 37.324 v15.1.0, "NR; Service Data Adaptation Protocol (SDAP) specification"
NPL 17: 3GPP RP-161266, "5G Architecture Options-Full Set"

### SUMMARY

### Technical Problem

As one of the technical studies of NR, a protocol for a radio access layer, which performs QoS (Quality of Service) management between a higher layer above an IP (Internet Protocol) layer and an NR radio access layer, is currently being studied.

However, when the QoS management between the higher layer and the radio access layer is not performed correctly, there is a problem that the communication between a base station apparatus and a terminal apparatus cannot be performed efficiently.

An aspect of the present invention has been made in view of the above circumstances, and an objective of the present invention is to provide a terminal apparatus capable of efficiently communicating with a base station apparatus, a base station apparatus, a method used for the terminal apparatus, and an integrated circuit mounted in the terminal apparatus.

### Solution to Problem

In order to achieve the above objective, the following technical solution is provided according to one aspect of the present invention. That is, a terminal apparatus communicating with a base station apparatus comprises a reception unit and a processing unit. The reception unit is configured to receive an RRC reconfiguration message including a radio bearer configuration information element from the base station apparatus; and the processing unit is configured to establish an SDAP entity, based on that a value of a radio bearer identifier information element included in the radio bearer configuration information element does not exist in the terminal apparatus and that the radio bearer configuration information element includes an SDAP configuration information element, when the SDAP entity for a PDU session information element included in the SDAP configuration information element does not exist. In addition, the processing unit is further configured to determine whether a data radio bearer for the PDU session information element existed before the RRC reconfiguration message is received; notify a higher layer that a user-plane resource for a PDU session corresponding to a value of the PDU session information element has been configured based on that the data radio bearer for the PDU session information element did not exist before the RRC reconfiguration message is received; and associate the established SDAP entity with the PDU session based on that the data radio bearer for the PDU session information element existed before the RRC reconfiguration message is received.

Further, one aspect of the present invention is a base station apparatus communicating with a terminal apparatus, and the base station comprises a transmission unit and a processing unit. The transmission unit is configured to transmit an RRC reconfiguration message including a radio bearer configuration information element to the terminal apparatus; and the processing unit is configured to include the radio bearer configuration information element in the RRC reconfiguration message and to cause the terminal apparatus to establish an SDAP entity, based on that a value of a radio bearer identifier information element included in the radio bearer configuration information element does not exist in the terminal apparatus and that the radio bearer configuration information element includes an SDAP configuration information element, when the SDAP entity for a PDU session information element included in the SDAP configuration information element does not exist. In addition, the processing unit is further configured to cause the terminal apparatus to determine whether a data radio bearer for the PDU session information element existed before the RRC reconfiguration message is received; notify a higher layer that a user-plane resource for a PDU session corresponding to a value of the PDU session information element has been configured based on that the data radio bearer for the PDU session information element did not exist before the RRC reconfiguration message is received; and associate the established SDAP entity with the PDU session based on that the data radio bearer for the PDU session information element existed before the RRC reconfiguration message is received.

Further, one aspect of the present invention is a method for a terminal apparatus communicating with a base station apparatus, and the method comprises: receiving an RRC reconfiguration message including a radio bearer configuration information element from the base station apparatus; and establishing an SDAP entity, based on that a value of a radio bearer identifier information element included in the radio bearer configuration information element does not exist in the terminal apparatus and that the radio bearer configuration information element includes an SDAP configuration information element, when the SDAP entity for a PDU session information element included in the SDAP configuration information element does not exist. In addition, the method further comprises: determining whether a data radio bearer for the PDU session information element existed before the RRC reconfiguration message is received; notifying a higher layer that a user-plane resource for a PDU session corresponding to a value of the PDU session information element has been configured based on that the data radio bearer for the PDU session information element did not exist before the RRC reconfiguration message is received; and associating the established SDAP entity with the PDU session based on that the data radio bearer for the PDU session information element existed before the RRC reconfiguration message is received.

Further, one aspect of the present invention is a method for a base station apparatus communicating with a terminal apparatus, and the method comprises: transmitting an RRC reconfiguration message including a radio bearer configuration information element to the terminal apparatus; and including the radio bearer configuration information element in the RRC reconfiguration message and causing the terminal apparatus to establish an SDAP entity, based on that a value of a radio bearer identifier information element included in the radio bearer configuration information element does not exist in the terminal apparatus and that the radio bearer configuration information element includes an SDAP configuration information element, when the SDAP entity for a PDU session information element included in the SDAP configuration information element does not exist. In addition, the method further comprises: causing the terminal apparatus to determine whether a data radio bearer for the PDU session information element existed before the RRC reconfiguration message is received; causing the terminal apparatus to notify a higher layer that a user-plane resource for a PDU session corresponding to a value of the PDU session information element has been configured based on that the data radio bearer for the PDU session information element did not exist before the RRC reconfiguration message is received; and causing the terminal apparatus to associate the established SDAP entity with the PDU session based on that the data radio bearer for the PDU session information element existed before the RRC reconfiguration message is received.

In addition, these comprehensive or specific aspects may be implemented in a system, an apparatus, a method, an integrated circuit, a computer program, or a recording medium, or may be implemented in any combination of systems, apparatuses, methods, integrated circuits, computer programs, and recording media.

### Invention Effect

According to one aspect of the present invention, the terminal apparatus can reduce the complexity of protocol processing and perform communication efficiently.

### BRIEF DESCRIPTION OF THE DRAWINGS

FIG. 1 is a conceptual diagram of a communication system according to each embodiment of the present invention.
FIG. 2 is a diagram of protocol stacks of a UP and a CP of a terminal apparatus and a base station apparatus in E-UTRA according to each embodiment of the present invention.
FIG. 3 is a protocol stack diagram of a UP and a CP of a terminal apparatus and a base station apparatus in NR according to each embodiment of the present invention.
FIG. 4 is a diagram showing an example of a flow of an RRC reconfiguration procedure according to each embodiment of the present invention.
FIG. 5 is a schematic block diagram illustrating a configuration of a terminal apparatus according to each embodiment of the present invention.
FIG. 6 is a schematic block diagram illustrating a configuration of a base station apparatus according to each embodiment of the present invention.
FIG. 7 is a diagram illustrating an example of information of a radio bearer configuration and an Abstract Syntax Notation One (ASN.1) description of information according to each embodiment of the present invention.
FIG. 8 is an example of a processing method according to an embodiment of the present invention.
FIG. 9 is an example of a processing method according to another embodiment of the present invention.

### DETAILED DESCRIPTION OF THE PREFERRED EMBODIMENTS

Hereinafter, the embodiments of the present invention will be described in detail with reference to the drawings.

LTE (and LTE-A Pro) and NR may be defined as different RATs. Also, the NR may be defined as a technology included in the LTE. The LTE may be defined as a technology included in the NR. Furthermore, the LTE capable of connecting with the NR through multi-RAT dual connectivity (MR-DC) as described in NPL 7 can be distinguished from the conventional LTE. The present embodiment may be applied to NR, LTE and other RATs. Terms associated with the LTE and the NR are used in the following description. However, the present invention may be applied to other technologies using other terms. Further, in the present embodiment, the term "E-UTRA" may be replaced with the term "LTE", and the term "LTE" may be replaced with the term "E-UTRA".

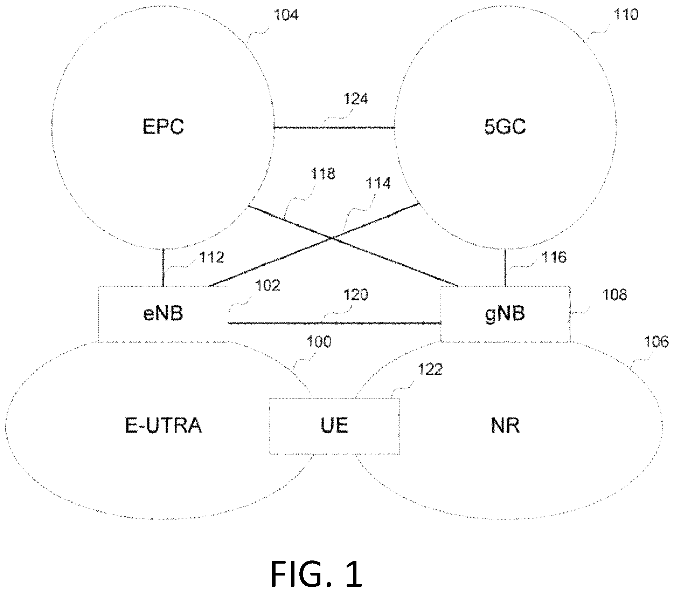

FIG. 1 is a conceptual diagram of a communication system according to each embodiment of the present invention.

An E-UTRA 100 is a radio access technology described in NPL 3 or the like, and is constituted by a Cell Group (CG) including one or multiple frequency bands. An eNB (E-UTRAN Node B) 102 is a base station apparatus of the E-UTRA. An EPC (Evolved Packet Core) 104 is a core network described in NPL 14 or the like and is designed as a core network for the E-UTRA. An interface 112 is an interface between the eNB 102 and the EPC 104, where there is a Control Plane (CP) through which control signals transfer and a User Plane (UP) through which user data transfers.

An NR 106 is a radio access technology described in NPL 9 or the like, and is constituted by a Cell Group (CG) including one or multiple frequency bands. An gNB (g Node B) 108 is an NR base station apparatus. A 5GC 110 is a core network described in NPL 2 or the like, and is designed as a core network for NR, but may be used as a core network for E-UTRA having a function of connecting with a 5CG. Hereinafter, the E-UTRA may also include an E-UTRA having a function of connecting with a 5CG.

An interface 114 is an interface between the eNB 102 and the 5GC 110, an interface 116 is an interface between the gNB 108 and the 5GC 110, an interface 118 is an interface between the gNB 108 and the EPC 104, an interface 120 is an interface between the eNB 102 and the gNB 108, and an interface 124 is an interface between the EPC 104 and 5GC 110. The interface 114, the interface 116, the interface 118, the interface 120, and the interface 124 are interfaces through which only CP passes, or only UP passes, or both the CP and the UP pass. Furthermore, the interface 114, the interface 116, the interface 118, the interface 120, and the interface 124 may not exist depending on communication systems provided by telecommunication operators.

A UE 122 is a terminal apparatus that supports NR or supports both E-UTRA and NR

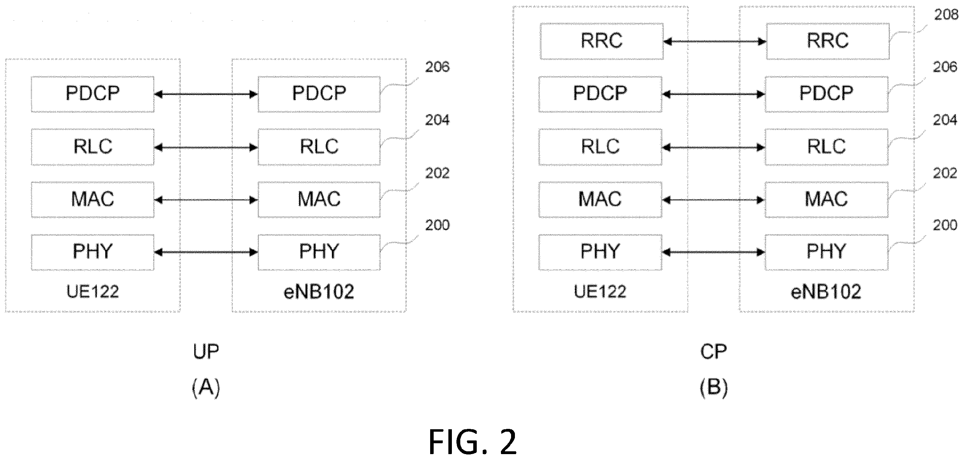

FIG. 2 is a diagram of protocol stacks of a UP and a CP of a terminal apparatus and a base station apparatus in an E-UTRA radio access layer according to each embodiment of the present invention.

FIG. 2(A) is a diagram of a protocol stack of the UP used in a case that the UE 122 communicates with the eNB 102 in the E-UTRA 100.

A PHY (Physical layer) 200 is a wireless physical layer for providing a transmission service to a higher layer by using a physical channel. The PHY 200 is connected with a MAC (Medium Access Control layer) 202, which is a higher layer and will be described below, via transport channels. Data is exchanged between the MAC 202 and the PHY 200 via the transport channels. The data is transmitted and/or received via the wireless physical channels between the PHYs of the UE 122 and the eNB 102.

The MAC 202 maps various logical channels to various transport channels. The MAC 202 is connected with an RLC (Radio Link Control layer) 204, which is a higher layer and will be described below, via logical channels. The logical channels are roughly classified depending on the type of transmitted information, specifically, classified into control channels for transmitting control information and traffic channels for transmitting user information. The MAC 202 has a function of controlling the PHY 200 in order to perform the Discontinuous Reception and Transmission (DRX and DTX), a function of performing a Random Access procedure, a function of reporting transmit power information, a function of performing HARQ control, and the like (NPL 7).

An RLC 204 is a Radio Link Control layer that divides (segmentation) the data received from a PDCP (Packet Data Convergence Protocol Layer) 206, which is a higher layer and will be described below, and adjusts the data size such that a lower layer can properly transmit data. Furthermore, the RLC 200 also has a function of ensuring Quality of Service (QoS) required for each piece of data. In other words, the RLC 204 has a function of data retransmission control or the like (NPL 6).

The PDCP 206 is a Packet Data Convergence Protocol layer for efficiently transmitting an IP Packet, which is user data, in a radio segment. The PDCP 206 may have a header compression function of compressing unnecessary control information. Furthermore, the PDCP 206 may also have a data encryption function (NPL 5).

In addition, data processed in the MAC 202, the RLC 204, and the PDCP 206 are referred to as a MAC PDU (Protocol Data Unit), an RLC PDU, and a PDCP PDU, respectively. Further, data transferred from the higher layer to the MAC 202, the RLC 204, and the PDCP 206 or data transferred to the higher layer are referred to as a MAC SDU (Service Data Unit), an RLC SDU, and a PDCP SDU, respectively.

FIG. 2(B) is a diagram of a protocol stack of the CP used in a case that the UE 122 communicates with the eNB 102 in the E-UTRA 100.

In addition to the PHY 200, the MAC 202, the RLC 204, and the PDCP 206, there is an RRC (Radio Resource Control layer) 208 in the protocol stack of the CP. The RRC 208 is a Radio Link Control layer that configures and reconfigures Radio Bearers (RBs) to control the logical channels, the transport channels, and the physical channels. The RBs may be classified into an SRB (Signaling Radio Bearer) and a DRB (Data Radio Bearer), and the SRB may be used as a path for transmitting an RRC message, which is control information. The DRB may be used as a path for transmitting user data. Each RB may be configured in the RRCs 208 of the eNB 102 and the UE 122 (NPL 4).

The functional classification of the MAC 202, the RLC 204, the PDCP 206, and the RRC 208 described above is an example, and some or all of the respective functions may not be implemented. Moreover, some or all of the functions of each layer may be included in another layer.

In addition, an IP layer, and a TCP (Transmission Control Protocol) layer, a UDP (User Datagram Protocol) layer, and an application layer above the IP layer, and the like are higher layers (not shown) above the PDCP layer. The RRC layer and the NAS (non-Access Strarum) layer are also higher layers above an SDAP layer (not shown). In other words, the PDCP layer is a lower layer below the RRC layer, the NAS layer, the IP layer, and the TCP (Transmission Control Protocol) layer, the UDP (User Datagram Protocol) layer, and the application layer above the IP layer.

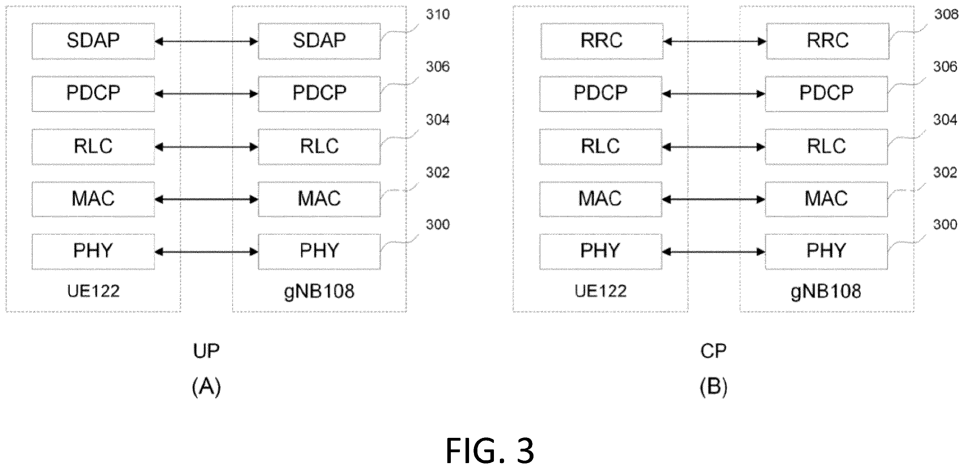

FIG. 3 is a diagram of protocol stacks of a UP and a CP of a terminal apparatus and a base station apparatus in an NR radio access layer according to each embodiment of the present invention.

FIG. 3 (A) is a diagram of a protocol stack of the UP used in a case that the UE 122 communicates with the gNB 108 in the NR 106.

A PHY (Physical layer) 300 is an NR wireless physical layer for providing a transmission service to a higher layer by using a physical channel. The PHY 300 can be connected with a MAC (Medium Access Control layer) 302, which is a higher layer and will be described below, via transport channels. Data can be exchanged between the MAC 302 and the PHY 300 via the transport channels. The data can be transmitted and/or received via the wireless physical channels between the PHYs of the UE 122 and the gNB 108.

The MAC 302 maps various logical channels to various transport channels. The MAC 302 is connected with an RLC (Radio Link Control layer) 304, which is a higher layer and will be described below, via logical channels. The logical channels can be roughly classified depending on the type of transmitted information, specifically, classified into control channels for transmitting control information and traffic channels for transmitting user information. The MAC 302 can have a function of controlling the PHY 300 in order to perform the Discontinuous Reception and Transmission (DRX and DTX), a function of performing a Random Access procedure, a function of reporting transmit power information, a function of performing HARQ control, and the like (NPL 13).

An RLC 304 is a Radio Link Control layer that divides (segmentation) the data received from a PDCP (Packet Data Convergence Protocol Layer) 206, which is a higher layer and will be described below, and adjusts the data size such that a lower layer can properly transmit data. Furthermore, the RLC 300 can also have a function of ensuring Quality of Service (QoS) required for each piece of data. In other words, the RLC 304 can also have a function of data retransmission control or the like (NPL 12).

The PDCP 306 is a Packet Data Convergence Protocol layer for efficiently transmitting an IP Packet, which is user data, in a radio segment. The PDCP 306 may have a header compression function of compressing unnecessary control information. Furthermore, the PDCP 306 may also have a data encryption function (NPL 11).

An SDAP (Service Data Adaptation Protocol) 310 is a SDAP layer having functions of mapping a DRB to a downlink QoS flow transmitted from a core network to a terminal apparatus via a base station apparatus, mapping a DRB to an uplink QoS flow transmitted from a terminal apparatus to a core network via a base station apparatus, and storing mapping rule information (NPL 16). When the terminal apparatus receives an SDAP SDU and QoS flow information from a higher layer, the SDAP SDU is allocated to a corresponding DRB based on the stored mapping rule between the QoS flow and the DRB. The SDAP SDU may be allocated to a default radio bearer (default DRB) when the mapping rule between the QoS flow and the DRB is not stored. The QoS flow includes one or more Service Data Flows (SDFs) that are processed by the same QoS policy (NPL 2). Further, the SDAP may have a reflective QoS (Reflective QoS) function that maps an uplink QoS flow and a DRB based on information of a downlink QoS flow. When the mapping rule between the QoS flow and the DRB is changed, an end marker (End Marker) DPU is created and transmitted to the before-changed DRB, thereby ensuring the in-sequence delivery of SDAP SDUs (NPL 2 and NPL 16).

The end marker PDU is the SDAP control PDU described in NPL 16, and is used for notifying, by an SDAP entity of the UE, that the mapping between the QoS flow, which corresponds to a QoS flow identifier included in a QoS flow identifier field of the end marker PDU, and the radio bearer sending the end marker PDU has been completed.

Further, as described in NPL 9 and NPL 16, one SDAP entity is established for each PDU (Packet Data Unit) session established in a higher layer or a core network. Furthermore, as described in NPL 9, when a PDU session is established, at least one DRB is established. That is, with the establishment of a PDU session, an SDAP entity and at least one DRB are established for the PDU session.

In addition, an IP layer, and a TCP (Transmission Control Protocol) layer, a UDP (User Datagram Protocol) layer, and an application layer above the IP layer, and the like are higher layers (not shown) above the SDAP layer. The RRC layer and the NAS (non-Access Strarum) layer are also higher layers above the SDAP layer (not shown). In the NAS layer, the mapping between a service data flow and a QoS flow is performed. In other words, the SDAP layer is a lower layer below the RRC layer, the NAS layer, the IP layer, and the TCP (Transmission Control Protocol) layer, the UDP (User Datagram Protocol) layer, and the application layer above the IP layer.

In addition, data processed in the MAC 302, the RLC 304, the PDCP 306, and SDAP 310 can be referred to as a MAC PDU (Protocol Data Unit), an RLC PDU, a PDCP PDU, and an SDAP DPU, respectively. Further, data transferred from the higher layer to the MAC 202, the RLC 204, and the PDCP 206 or data transferred to the higher layer are referred to as a MAC SDU (Service Data Unit), an RLC SDU, a PDCP SDU, and an SDAP SDU, respectively.

FIG. 3 (B) is a diagram of a protocol stack of the CP used in a case that the UE 122 communicates with the gNB 108 in the NR 106.

In addition to the PHY 300, the MAC 302, the RLC 304, and the PDCP 306, there is an RRC (Radio Resource Control layer) 308 in the protocol stack of the CP. The RRC 308 is a Radio Link Control layer that configures and reconfigures Radio Bearers (RBs) to control the logical channels, the transport channels, and the physical channels. The RBs may be classified into an SRB (Signaling Radio Bearer) and a DRB (Data Radio Bearer), and the SRB may be used as a path for transmitting an RRC message, which is control information. The DRB may be used as a path for transmitting user data. Each RB may be configured in the RRCs 308 of the gNB 108 and the UE 122. Further, a portion of the RB constituted by the RLC 304 and the MAC 302 may be referred to as an RLC bearer (NPL 10).

The functional classification of the MAC 302, the RLC 304, the PDCP 306, the SDAP 310, and the RRC 308 described above is an example, and some or all of the respective functions may not be implemented. Moreover, some or all of the functions of each layer may also be included in another layer.

Further, in each embodiment of the present invention, in order to distinguish the following E-UTRA protocol from the NR protocol, the MAC 202, the RLC 204, the PDCP 206, and the RRC 208 may be referred to as the MAC for E-UTRA or the MAC for LTE, the RLC for E-UTRA or the RLC for LTE, the PDCP for E-UTRA or the PDCP for LTE, and the RRC for E-UTRA or the RRC for LTE, respectively. Further, the MAC 302, the RLC 304, the PDCP 306, and the RRC 308 may also be referred to as the MAC for NR, the RLC for NR, the RLC for NR, and the RRC for NR, respectively. Alternatively, they may be expressed by using a space, such as E-UTRA PDCP, LTE PDCP, NR PDCP, or the like.

Further, as shown in FIG. 1, the eNB 102, the gNB 108, the EPC 104, and the 5GC 110 may be connected via the interface 112, the interface 116, the interface 118, the interface 120, and the interface 114. Therefore, the RRC 208 in FIG. 2 may be replaced with the RRC 308 in FIG. 3 in order to support various communication systems. Further, the PDCP 206 in FIG. 2 may also be replaced with the PDCP 306 in FIG. 3. Further, the RRC 308 in FIG. 3 may include the function of the RRC 208 in FIG. 2. Further, the PDCP 306 in FIG. 3 may be the PDCP 206 in FIG. 2. Further, in the E-UTRA 100, the NR PDCP may be used as the PDCP when the UE 122 communicates with the eNB 102.

### (EMBODIMENTS)

Hereinafter, the embodiments of the present invention will be described with reference to FIG. 1 to FIG. 9. In the embodiment of the present invention, when a PDU session is newly established, the higher layer is notified that user-plane resources for the PDU session have been established or configured when the SDAP entity is established.

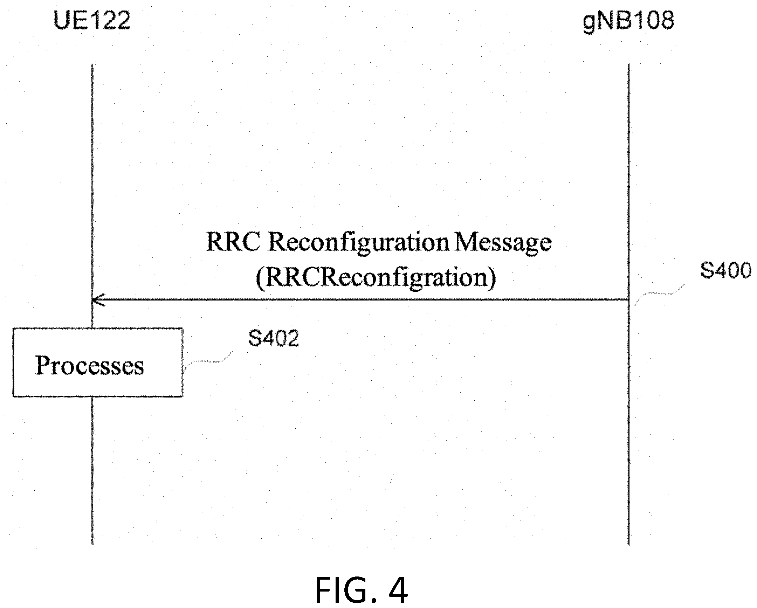

FIG. 4 is a diagram showing an example of a flow of an RRC reconfiguration procedure according to each embodiment of the present invention. In addition, the RRC reconfiguration procedure may be an RRC connection reconfiguration procedure.

The RRC connection reconfiguration procedure (RRC Connection Reconfiguration) is a procedure used for configuring, in LTE, establishment, modification, and release of a radio bearer (RB), and change and release of a secondary cell, and the like, and additionally, used for configuring handover and measurement, and the like as described in NPL 4. On the other hand, the RRC reconfiguration procedure (RRC Reconfiguration) is a procedure used for configuring, in NR, establishment, modification, and release of an RB, and change and release of a secondary cell, and the like, and additionally, is used for configuring handover (with reconfiguration of synchronization) and measurement, and the like as described in NPL 10. In addition, in the embodiment of the present invention, the information, which is included in each message in the RRC connection reconfiguration procedure, for configuring establishment, modification, and release of the RB, and change and release of the secondary cell, and handover, measure, and the like is referred to as configuration information. In addition, the configuration information is not limited to be used for the above configurations, and may be used for other configurations, and may be included in each message of other procedures without being limited to be included in the RRC connection reconfiguration procedure.

Moreover, the RRC connection reconfiguration procedure can also be used for MR-DC (Multi-RAT Dual Connectivity) described in NPL 8, in particular, for MR-DC, i.e., EN-DC (E-UTRA-NR Dual Connectivity), in a case that the core network is the EPC 104 and the master node is the eNB 102 (also referred to as extended eNB 102) (option 3 and option 3a described in NPL 17); for MR-DC, i.e., NGEN-DC (NG-RAN E-UTRA-NR Dual Connectivity), in a case that the core network is the 5GC 110 and the master node is the eNB 102 (option 7 and option 7a described in NPL 17) ; and for E-UTRA/5GC in which the eNB 102 (extended eNB) uses a 5GC as the core network (option 5 described in NPL 17). In this case, the RRC connection reconfiguration procedure may include not only LTE (E-UTRA) configuration information but also NR configuration information described in NPL 10. Further, in this case, an RRC connection reconfiguration message may be transmitted from the eNB 102 to the UE 122 via the gNB 108.

Further, the RRC reconfiguration procedure can also be used for MR-DC, in particular, for MR-DC, i.e., NE-DC (NR-E-UTRA Dual Connectivity) in a case that the core network is the 5GC 110 and the master node is the gNB 108 (option 4 and option 4a described in NPL 17). In this case, the RRC connection reconfiguration procedure may include not only NR configuration information but also LTE (E-UTRA) configuration information described in NPL 10. Further, in this case, an RRC reconfiguration message may be transmitted from the gNB 108 to the UE 122 via the eNB 102.

In each embodiment of the present invention, in order to avoid complicating the description, the description will be given by using the name of RRC reconfiguration procedure and using the gNB 108 as the base station apparatus. In addition, the names for architectures, such as EN-DC, NGEN-DC, E-UTRA/5GC, and NE-DC, may be called by other names instead of these.

In the RRC reconfiguration procedure, the UE 122 receives an RRC reconfiguration message (RRC Reconfiguration) from the gNB 108 (step S400), and performs various configuration processes, e.g., configuration of a radio bearer and configuration of an SDAP, based on information included in the RRC reconfiguration message (step S402). After the step S402, the UE 122 may transmit an RRC reconfiguration complete message (RRC Reconfiguration Complete) or the like (not shown) to the gNB 108. In addition, the RRC reconfiguration message may be otherwise referred to as RRC reconfiguration, and the RRC reconfiguration complete message may be otherwise referred to as RRC reconfiguration complete.

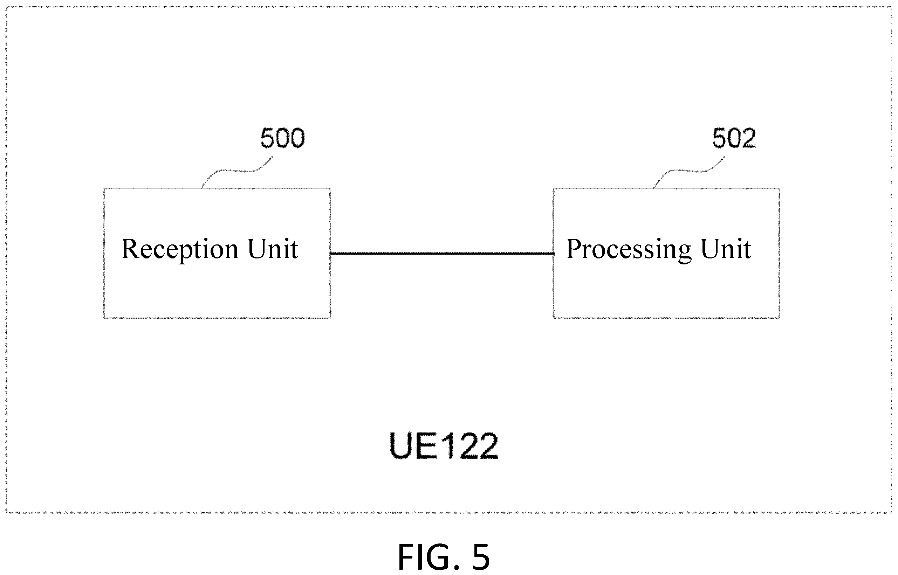

FIG. 5 is a schematic block diagram illustrating a configuration of a terminal apparatus (UE 122) according to each embodiment of the present invention. Further, in order to avoid complicating the description, only the main components closely related to one aspect of the present invention are shown in FIG. 5.

The UE 122 shown in FIG. 5 includes a reception unit 500 that receives an RRC reconfiguration message or the like from the gNB 108, and a processing unit 502 that performs processes based on configuration information, such as various information elements (IE), and/or various fields, and/or various conditions, included in the received message.

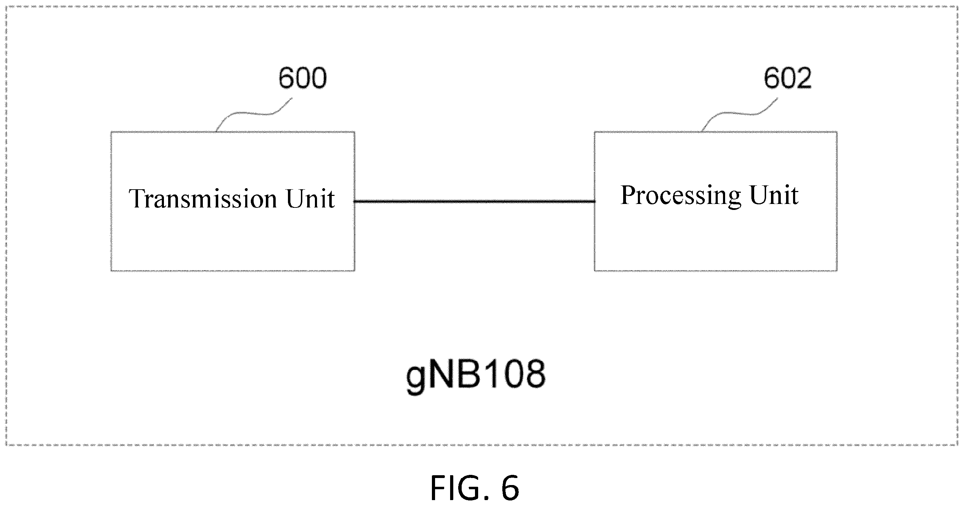

FIG. 6 is a schematic block diagram illustrating a configuration of a base station apparatus (gNB 108) according to each embodiment of the present invention. Further, in order to avoid complicating the description, only the main components closely related to one aspect of the present invention are shown in FIG. 6.

The gNB 108 shown in FIG. 6 includes a transmission unit 600 that transmits an RRC reconfiguration message or the like to the UE 122, and a processing unit 602 that creates the RRC reconfiguration message including configuration information, such as various information elements (IE), and/or various fields, and/or various conditions, to be transmitted to the UE 122 and to cause the processing unit 502 of the UE 122 to perform processes. Further, the configuration shown in FIG. 6 can be applied to the eNB 102. When it is applied to the eNB 102, the message transmitted from the transmission unit 600 to the UE 122 may be an RRC connection reconfiguration message.

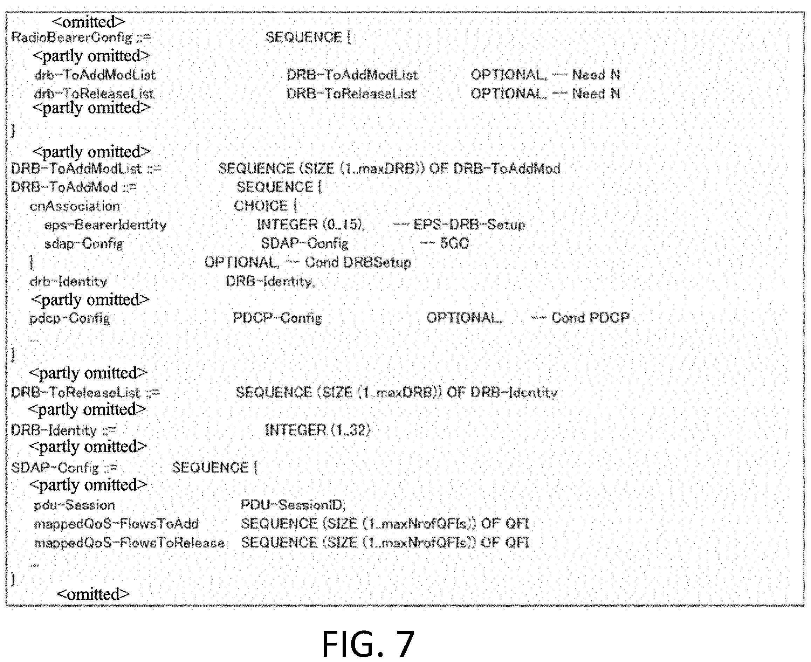

FIG. 7 illustrates an example of an Abstract Syntax Notation One (ASN.1) description of information element included in the RRC reconfiguration message shown in FIG. 4 according to the first embodiment of the present invention. In the 3GPP, the specifications related to the RRC (NPL 4 and NPL 10) describe messages, information elements (IEs), and the like related to the RRC by using ASN. 1. In the example of ASN. 1 shown in FIG. 7, <omitted> and <partly omitted> are not parts of the ASN. 1 notation but indicate that other information is omitted. Further, an information element may be omitted even in a place where <omitted> or <partly omitted> is not described. In addition, the example of ASN. 1 shown in FIG. 7 does not correctly comply with ASN. 1 notation means, but describes an example of parameters of the RRC reconfiguration according to the present invention, and other names and other notations may be used. Further, in order to avoid complicating the description, only the example related to main information closely related to one aspect of the present invention is shown in the example of the ASN. 1 in FIG. 7.

In FIG. 7, the information element represented by DRB-ToAddModList or DRBToAddMod may be a list of information indicating the configuration of DRBs (Data Radio Bearers) to be added or modified, and may also be referred to as a radio bearer configuration information element or a data radio bearer information element in the embodiment of the present invention.

The information element represented by DRB-Identity in the radio bearer configuration information element may be information of a DRB identifier of the DRB to be added or modified, and may also be referred to as a radio bearer identifier information element or a data radio bearer identifier information element in the embodiment of the present invention. In the example of FIG. 7, this information element is set to one of integer values from 1 to 32, but another value may be taken. In the case of DC, the DRB identifier is unique within the scope of the UE 122.

The information element represented by cnAssociation in the radio bearer configuration information element may be an information element indicating whether the EPC 104 or the 5GC 110 is used in the core network, and may also be referred to as a core network association information element in the embodiment of the present invention. That is, when the UE 122 is connected to an EPC, the DRB is associated with EPS bearer identifier information element (eps-BearerIdentity) in the cnAssociation or an EPS bearer identifier that is the value of the EPS bearer identifier information element; and when the UE 122 is connected to the 5GC 110, the DRB is associated with an SDAP entity that is configured according to an SDAP configuration information element (sdap-Config) described below, or a PDU session information element described below and included in an SDAP configuration information element, or a PDU session identifier that is the value of the PDU session information element, or a PDU session indicated by the PDU session information element. That is, the information represented by the cnAssociation may include an EPS bearer identifier information element (eps-BearerIdentity) in the case where the EPC 104 is used as the core network, such as in a case where the EN-DC is used, and may include an information element (sdap-Config) indicating the SDAP configuration in the case where the 5GC 110 is used as the core network, that is, in the case where the EN-DC is not used, and the like.

When the core network is the 5GC 110, the information element indicated by sdap-Config may be information about the configuration or reconfiguration of the SDAP entity to determine the mapping method between the QoS flow and the DRB, and may also be referred to as an SDAP configuration information element in the embodiment of the present invention.

The field or the information element indicated by pdu-session or PDU-SessionID included in the SDAP configuration information element may be an identifier of a PDU session (described in NPL 2), to which a QoS flow, which is mapped to a radio bearer corresponding to the value of a radio bearer identifier information element included in the radio bearer configuration information element including the SDAP configuration information element, belongs; and this field or information element may also be referred to as a PDU session information element in the embodiment of the present invention. The value of the PDU session information element may be a non-negative integer.

The information element indicated by mappedQoS-FlowsToAdd included in the SDAP configuration information element may be information indicating a list of QoS flow identifier (QoS Flow Identity (QFI)) information elements (described below) of QoS flows, which are to be mapped to or to be additionally mapped to a radio bearer corresponding to the value of a radio bearer identifier information element included in the radio bearer configuration information element including the SDAP configuration information element; and this field or information element may also be referred to as a to-be-added QoS flow information element in the embodiment of the present invention. The above-mentioned QoS flow may be a QoS flow of a PDU session indicated by a PDU session information element included in the present SDAP configuration information element.

Further, the information element indicated by mappedQoS-FlowsToRelease included in the SDAP configuration information element may be information indicating a list of QoS flow identifier (QoS Flow Identity (QFI)) information elements (described below) of QoS flows that are to releases the mapping relation among QoS flows mapped to a radio bearer corresponding to the value of a radio bearer identifier information element included in the radio bearer configuration information element including the SDAP configuration information element; and this field or information element may also be referred to as a to-be-released QoS flow information element in the embodiment of the present invention. The above-mentioned QoS flow may be a QoS flow of a PDU session indicated by a PDU session information element included in the SDAP configuration information element.

The information element represented by the QFI may be a QoS flow identifier that uniquely identifies a QoS flow as described in NPL 2, and may also be referred to as a QoS flow identifier information element in the embodiment of the present invention. The value of the QoS flow identifier information element may be a non-negative integer. Further, the value of the QoS flow identifier information element may be unique for a PDU session.

In addition, the SDAP configuration information element further includes an uplink header information element indicating whether an uplink SDAP header exists in uplink data transmitted via a DRB to be configured, a downlink header information element indicating whether a downlink SDAP header exists in downlink data received via a DRB to be configured, a default bearer information element indicating whether a DRB to be configured is a default radio bearer (default DRB), and the like.

Further, the information element indicated by pdcp-Config or PDCP-Config in the radio bearer configuration information element may be information related to the configuration of an NR PDCP entity for establishing or changing the PDCP 306 for an SRB or a DRB, and this information element may be also referred to as a PDCP configuration information element in the embodiment of the present invention. The information related to the configuration of the NR PDCP entity may further include information indicating the size of a sequence number for an uplink, information indicating the size of a sequence number for a downlink, information indicating a profile of RObust Header Compression (RoHC), reordering timer information, and the like.

Further, the information element represented by DRB-ToReleaseList in the radio bearer configuration information element may be list information of DRB identifiers of the DRBs to be released, and may also be referred to as a to-be-released radio bearer information element or a to-be-released data radio bearer information element in the embodiment of the present invention.

Furthermore, some or all of the information elements shown in FIG. 7 may be optional. That is, the information elements shown in FIG. 7 may be included in an RRC reconfiguration message depending on the necessity and conditions.

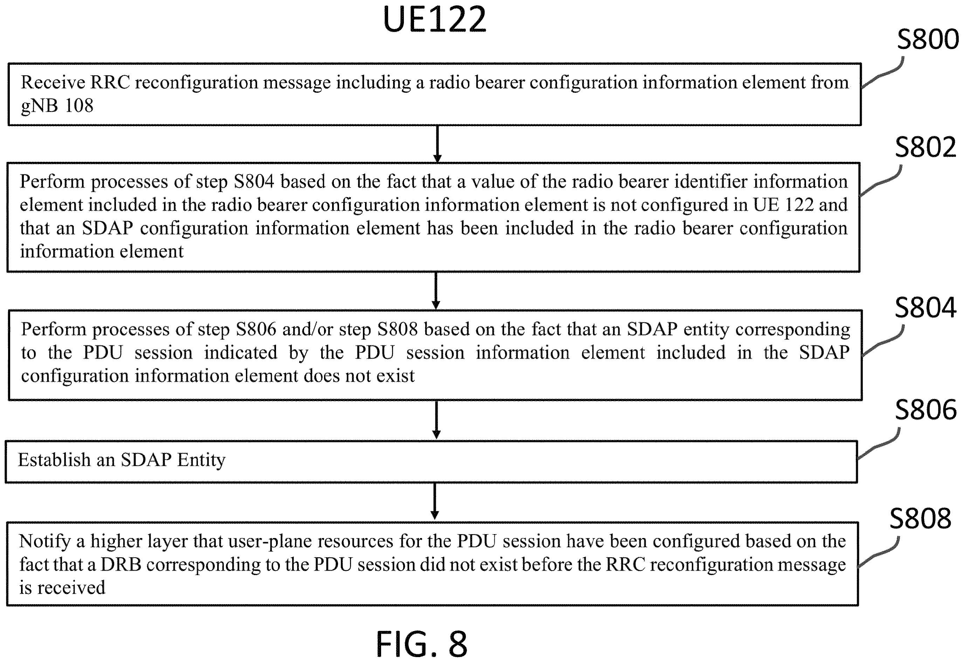

An example of a processing method of the UE 122 according to the embodiment of the present invention will be described with reference to FIG. 8.

The processing unit 602 of the gNB 108 creates an RRC reconfiguration message including a radio bearer configuration information element for causing the UE 122 to perform a process, and the RRC configuration message is transmitted to the UE 122 from the transmission unit 600 (not shown). The reception unit 500 of the UE 122 receives the RRC reconfiguration message from the gNB 108 (step S800). In addition, the UE 122 may receive the RRC message including the above-mentioned radio bearer configuration information element from the eNB 102.

Next, the processing unit 502 of the UE 122 determines whether the value of the radio bearer identifier information element included in the above-mentioned radio bearer configuration information element has been configured in the UE 122 and whether an SDAP configuration information element has been included in the radio bearer configuration information element, and performs the processes of step S804, which will be described below, based on the fact that the value of the radio bearer identifier information element included in the above-mentioned radio bearer configuration information element is not configured in the UE 122 and/or the SDAP configuration information element has been included in the above-mentioned radio bearer configuration information element (step S802).

The processing unit 502 of the UE 122 determines whether an SDAP entity corresponding to a PDU session indicated by the PDU session information element included in the SDAP configuration information element exists, and performs the processes of step S806 and/or step S808 based on the fact that the SDAP entity corresponding to the PDU session indicated by the PDU session information element included in the SDAP configuration information element does not exist (step S804).

The processing unit 502 of the UE 122 establishes an SDAP entity (step S806). In addition, a DRB corresponding to the value of the radio bearer identifier information element may be established by establishing a PDCP entity or the like before the SDAP entity described above is established. Further, after the SDAP entity is established, the SDAP entity may be further configured or reconfigured. Moreover, when the SDAP entity is configured or reconfigured, the established DRB described above may be associated with the SDAP entity described above.

The processing unit 502 of the UE 122 determines whether a DRB and/or a DRB identifier corresponding to the above-mentioned PDU session existed before the RRC reconfiguration message is received, and notifies a higher layer that "user-plane resources for the above-mentioned PDU session have been established" based on the fact that the DRB and/or the DRB identifier corresponding to the above-mentioned PDU session did not exist before the RRC reconfiguration message is received. (step S808). In addition, the expression that "user-plane resources for the above-mentioned PDU session have been established" may also be referred to as that "user-plane resources for the above-mentioned PDU session have been configured" or another expression.

The processing unit 502 of the UE 122 determines whether a DRB and/or a DRB identifier corresponding to the above-mentioned PDU session existed before the RRC reconfiguration message is received, and may not notify a higher layer that "user-plane resources for the above-mentioned PDU session have been established" based on the fact that the DRB and/or the DRB identifier corresponding to the above-mentioned PDU session existed before the RRC reconfiguration message is received.

The expression that "user-plane resources for the above-mentioned PDU session have been established" may also be referred to as that "a QoS flow information element included in the to-be-added QoS flow information element included in the above-mentioned SDAP configuration information element, or a mapping rule between the radio bearer and the QoS flow corresponding to the value of the QoS flow identifier information element has been stored. "

The notification of "user-plane resources for the above-mentioned PDU session have been established" may be, for example, to notify a higher layer of the above-mentioned PDU session identifier information element or the value of the PDU session identifier information element. Meanwhile, the above-mentioned QoS flow identifier information element or the value of the QoS flow identifier information element may be notified to the higher layer at the same time; or the above-mentioned QoS flow identifier information element or the value of the QoS identifier information element may be notified to the higher layer instead of notifying the higher layer of the PDU session identifier information element or the value of the PDU session identifier information element.

In addition, the expression "determining whether a DRB and/or a DRB identifier corresponding to the above-mentioned PDU session existed before the RRC reconfiguration message is received" may also be referred to or supplemented as "determining whether the establishment of the SDAP entity (in step S806) is a result of a full configuration". Moreover, the expression "based on contents other than those mentioned above" may also be referred to or supplemented as "based on the fact that the establishment of the SDAP entity (in step S806) described above is not a result of a full configuration".

Further, in step S808, the expression that "the DRB and/or the DRB identifier corresponding to the above-mentioned PDU session did not exist before the RRC reconfiguration message is received" may also be referred to a condition other than that "the DRB and/or the DRB identifier corresponding to the above-mentioned PDU session existed before the RRC reconfiguration message is received" (else). In addition, the expression that "the establishment of the SDAP entity (in step S806) described above is not a result of a full configuration" may also be referred to as a condition other than that "the establishment of the SDAP entity (in step S806) described above is a result of a full configuration" (else).

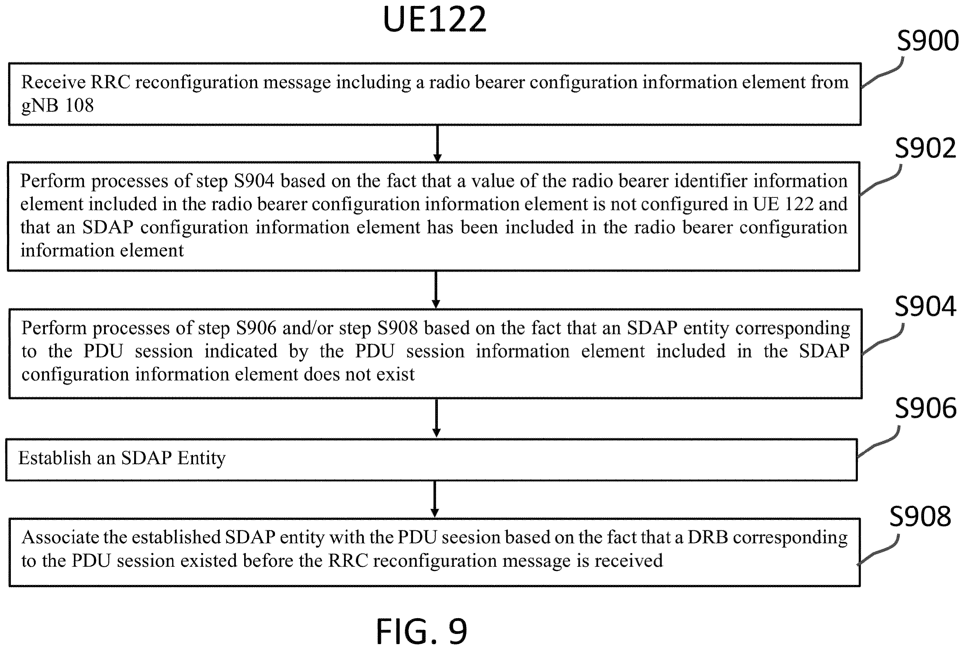

Next, another example of a processing method of the UE 122 according to the embodiment of the present invention will be described with reference to FIG. 9.

The processing unit 602 of the gNB 108 creates an RRC reconfiguration message including a radio bearer configuration information element for causing the UE 122 to perform a process, and the RRC configuration message is transmitted to the UE 122 from the transmission unit 600 (not shown). The reception unit 500 of the UE 122 receives the RRC reconfiguration message from the gNB 108 (step S900). In addition, the UE 122 may receive the RRC message including the above-mentioned radio bearer configuration information element from the eNB 102.

Next, the processing unit 502 of the UE 122 determines whether the value of the radio bearer identifier information element included in the above-mentioned radio bearer configuration information element has been configured in the UE 122 and whether an SDAP configuration information element has been included in the radio bearer configuration information element, and performs the processes of step S904, which will be described below, based on the fact that the value of the radio bearer identifier information element included in the above-mentioned radio bearer configuration information element is not configured in the UE 122 and/or the SDAP configuration information element has been included in the above-mentioned radio bearer configuration information element (step S902).

The processing unit 502 of the UE 122 determines whether an SDAP entity corresponding to a PDU session indicated by the PDU session information element included in the SDAP configuration information element exists, and performs the processes of step S906 described below and/or step S908 described below based on the fact that the SDAP entity corresponding to the PDU session indicated by the PDU session information element included in the SDAP configuration information element does not exist. (step S904).

The processing unit 502 of the UE 122 establishes an SDAP entity (step S906). In addition, a DRB corresponding to the value of the radio bearer identifier information element may be established by establishing a PDCP entity or the like before the SDAP entity described above is established. Further, after the SDAP entity is established, the SDAP entity may be further configured or reconfigured. Moreover, when the SDAP entity is configured or reconfigured, the established DRB described above may be associated with the SDAP entity described above.

The processing unit 502 of the UE 122 determines whether a DRB and/or a DRB identifier corresponding to the above-mentioned PDU session existed before the RRC reconfiguration message is received, and associates the established SDAP entity (in step S906) described above with the PDU session described above based on the fact that the DRB and/or the DRB identifier corresponding to the above-mentioned PDU session existed before the RRC reconfiguration message is received (step S908).

In addition, the expression "determining whether a DRB and/or a DRB identifier corresponding to the above-mentioned PDU session existed before the RRC reconfiguration message is received" may also be referred to or supplemented as "determining whether the establishment of the SDAP entity (in step S906) is a result of a full configuration". In addition, the expression "based on the fact that the DRB and/or the DRB identifier corresponding to the above-mentioned PDU session existed before the RRC reconfiguration message is received" may also be referred to or supplemented as "based on the fact that the establishment of the SDAP entity (in step S906) is a result of a full configuration".

Further, in step S908, the expression that "the DRB and/or the DRB identifier corresponding to the above-mentioned PDU session existed before the RRC reconfiguration message is received" may also be referred to a condition other than that "the DRB and/or the DRB identifier corresponding to the above-mentioned PDU session did not exist before the RRC reconfiguration message is received" (else). In addition, the expression that "the establishment of the SDAP entity (in step S906) described above is a result of a full configuration" may also be referred to as a condition other than that "the establishment of the SDAP entity (in step S906) described above is not a result of a full configuration" (else).

In addition, in the embodiment of the present invention, the process of notifying the higher layer that "the user-plane resources for the PDU session corresponding to the above-mentioned PDU session information element have been established or configured" may be performed by the RRC 308 or the RRC 208, or may be performed by the SDAP 310. Further, the higher layer to be notified that "the user-plane resources for the PDU session corresponding to the above-mentioned PDU session information element have been established or configured" may be a NAS layer. Further, the notification of "the user-plane resources for the PDU session corresponding to the above-mentioned PDU session information element have been established or configured" to the higher layer may be performed after the RRC 308 or the RRC 208 confirms that a QoS flow information element included in the to-be-added QoS flow information element included in the above-mentioned radio bearer configuration information element, or a mapping rule between the radio bearer and the QoS flow corresponding to the value of the QoS flow identifier information element has been stored in the SDAP 310. The method of confirming that the above mapping rule has been stored may be a notification transmitted from the SDAP 310 to the RRC 308 or the RRC 208 to indicate that the mapping rule has been stored.

As described above, in the embodiment of the present invention, when a PDU session is newly established, the higher layer is notified that user-plane resources for the PDU session have been established or configured when the SDAP entity is established. As a result, the higher layer can detect that the user-plane resources for the PDU session have been established in the lower layer, and user data can be transmitted at the optimum timing. That is, the terminal apparatus can reduce the complexity of protocol processing and perform communication efficiently.

In addition, in the embodiment of the present invention, the expression "the DRB and/or the DRB identifier corresponding to the PDU session" may also be referred to as "the SDAP entity corresponding to the PDU session". Moreover, in the embodiment of the present invention, the expression "the DRB and/or the DRB identifier corresponding to the PDU session" may also be referred to as "PDCP entity, and/or RLC bearer, and/or logical channel identifier corresponding to the PDU session".

In addition, in the embodiment of the present invention, the expression that "the DRB and/or DRB identifier corresponding to the PDU session did not exist", and/or that "the SDAP entity corresponding to the PDU session did not exist," and/or that "the PDCP entity, RLC bearer, and/or logical channel identifier corresponding to the PDU session did not exist" may also be referred to as that "the PDU session and/or the PDU session identifier is not configured in the terminal apparatus" or that "the PDU session and/or the PDU session identifier is not a part of the current configuration of the terminal apparatus."

Moreover, in the embodiment of the present invention, the expression that "the DRB and/or the DRB identifier corresponding to the PDU session did not exist" may also be referred to as a condition other than that "the DRB and/or the DRB identifier corresponding to the PDU session existed" (else). Further, the expression that "the SDAP entity corresponding to the PDU session did not exist" may also be referred to as a condition other than that "the SDAP corresponding to the PDU session existed" (else). Moreover, the expression that "the PDCP entity, and/or RLC bearer, and/or logic channel identifier corresponding to the PDU session did not exist" may also be referred to as a condition other than that "the PDCP entity, and/or RLC bearer, and/or logic channel identifier corresponding to the PDU session existed" (else). In addition, the expression that "the PDU session and/or the PDU session identifier is not configured in the terminal apparatus" or that "the PDU session and/or the PDU session identifier is not a part of the current configuration of the terminal apparatus" may also be referred to as a condition other than that "the PDU session and/or the PDU session identifier is configured in the terminal apparatus" (else) or a condition other than that "the PDU session and/or the PDU session identifier is a part of the current configuration of the terminal apparatus" (else), respectively.

Further, in the embodiment of the present invention, the expression that "the DRB and/or DRB identifier corresponding to the PDU session did not exist", and/or that "the SDAP entity corresponding to the PDU session did not exist," and/or that "the PDCP entity, RLC bearer, and/or logical channel identifier corresponding to the PDU session did not exist" may also be referred to as that "the same PDU session or PDU session identifier was not included in the radio bearer configuration." Further, the expression that "the same PDU session or PDU session identifier was not included in the radio bearer configuration" may also be referred to as a condition other than that "the same PDU session or PDU session identifier was included in the radio bearer configuration" (else).

In addition, the radio bearer configuration in each embodiment of the present invention may be included not only in an RRC connection reconfiguration procedure, but also in an RRC establishment procedure and an RRC re-establishment procedure. Furthermore, the radio bearer in each embodiment of the present invention may be a DRB or an SRB.

In addition, the "information element" in each embodiment may also be referred to as a "field".

Further, in each embodiment of the present invention, the notification of "the user-plane resources for the PDU session corresponding to the PDU session information element have been established" to the higher layer and/or "the user-plane resources for the PDU session corresponding to the PDU session information element have been established or configured" to the higher layer may be any other information if it is information indicating that "the user-plane resources for the PDU session corresponding to the PDU session information element have been established" and/or "the user-plane resources for the PDU session corresponding to the PDU session information element have been established or configured", except for the paraphrased example in each embodiment of the present invention.

Also, in the embodiment of the present invention, the expression that "the SDAP configuration information element has been included in the radio bearer configuration information element" may also mean that the EN-DC is not used, that is, the opposite of using the EN-DC. This is because, as described in NPL 8 and NPL 9, the EPC is used as the core network only in the case of EN-DC in NR (New Radio technology).

Further, the processes and methods of the terminal apparatus and the base station apparatus described in each embodiment of the present invention can be summarized, for example, as follows.

That is, a terminal apparatus communicating with a base station apparatus comprises a reception unit and a processing unit. The reception unit is configured to receive an RRC reconfiguration message including a radio bearer configuration information element from the base station apparatus; and the processing unit is configured to establish an SDAP entity, based on that a value of a radio bearer identifier information element included in the radio bearer configuration information element does not exist in the terminal apparatus and that the radio bearer configuration information element includes an SDAP configuration information element, when the SDAP entity for a PDU session information element included in the SDAP configuration information element does not exist. In addition, the processing unit is further configured to determine whether a data radio bearer for the PDU session information element existed before the RRC reconfiguration message is received; notify a higher layer that a user-plane resource for a PDU session corresponding to a value of the PDU session information element has been configured based on that the data radio bearer for the PDU session information element did not exist before the RRC reconfiguration message is received; and associate the established SDAP entity with the PDU session based on that the data radio bearer for the PDU session information element existed before the RRC reconfiguration message is received.

Further, a base station apparatus communicating with a terminal apparatus comprises a transmission unit and a processing unit. The transmission unit is configured to transmit an RRC reconfiguration message including a radio bearer configuration information element to the terminal apparatus; and the processing unit is configured to include the radio bearer configuration information element in the RRC reconfiguration message and to cause the terminal apparatus to establish an SDAP entity, based on that a value of a radio bearer identifier information element included in the radio bearer configuration information element does not exist in the terminal apparatus and that the radio bearer configuration information element includes an SDAP configuration information element, when the SDAP entity for a PDU session information element included in the SDAP configuration information element does not exist. In addition, the processing unit is further configured to cause the terminal apparatus to determine whether a data radio bearer for the PDU session information element existed before the RRC reconfiguration message is received; notify a higher layer that a user-plane resource for a PDU session corresponding to a value of the PDU session information element has been configured based on that the data radio bearer for the PDU session information element did not exist before the RRC reconfiguration message is received; and associate the established SDAP entity with the PDU session based on that the data radio bearer for the PDU session information element existed before the RRC reconfiguration message is received.

Further, a method for a terminal apparatus communicating with a base station apparatus comprises: receiving an RRC reconfiguration message including a radio bearer configuration information element from the base station apparatus; and establishing an SDAP entity, based on that a value of a radio bearer identifier information element included in the radio bearer configuration information element does not exist in the terminal apparatus and that the radio bearer configuration information element includes an SDAP configuration information element, when the SDAP entity for a PDU session information element included in the SDAP configuration information element does not exist. In addition, the method further comprises: determining whether a data radio bearer for the PDU session information element existed before the RRC reconfiguration message is received; notifying a higher layer that a user-plane resource for a PDU session corresponding to a value of the PDU session information element has been configured based on that the data radio bearer for the PDU session information element did not exist before the RRC reconfiguration message is received; and associating the established SDAP entity with the PDU session based on that the data radio bearer for the PDU session information element existed before the RRC reconfiguration message is received.

Further, a method for a base station apparatus communicating with a terminal apparatus comprises: transmitting an RRC reconfiguration message including a radio bearer configuration information element to the terminal apparatus; and including the radio bearer configuration information element in the RRC reconfiguration message and causing the terminal apparatus to establish an SDAP entity, based on that a value of a radio bearer identifier information element included in the radio bearer configuration information element does not exist in the terminal apparatus and that the radio bearer configuration information element includes an SDAP configuration information element, when the SDAP entity for a PDU session information element included in the SDAP configuration information element does not exist. In addition, the method further comprises: causing the terminal apparatus to determine whether a data radio bearer for the PDU session information element existed before the RRC reconfiguration message is received; causing the terminal apparatus to notify a higher layer that a user-plane resource for a PDU session corresponding to a value of the PDU session information element has been configured based on that the data radio bearer for the PDU session information element did not exist before the RRC reconfiguration message is received; and causing the terminal apparatus to associate the established SDAP entity with the PDU session based on that the data radio bearer for the PDU session information element existed before the RRC reconfiguration message is received.

A program running on an apparatus according to the present invention may serve as a program that controls a central processing unit (CPU) and the like to cause a computer to operate in such a manner as to implement the functions of the above-described embodiment according to the present invention. Programs or information processed by the programs can be temporarily read into a volatile memory such as a random access memory (RAM), or stored in a non-volatile memory such as a flash memory or a hard disk drive (HDD), and can be read by the CPU to perform a correcting or writing-in operation as necessary.

In addition, a part of the apparatus in the embodiment described above may be implemented by a computer. In this case, it may be realized by recording a program for realizing the control function on a computer-readable recording medium, and causing a computer system to read the program recorded on the recording medium for execution. The "computer system" described herein refers to a computer system built into the apparatus, and includes an operating system and hardware components such as peripheral devices. The "computer-readable recording medium" may be any of a semiconductor recording medium, an optical recording medium, a magnetic recording medium, and the like.

The "computer-readable recording medium" may include a recording medium that dynamically holds a program for a short period of time, for example, a communication line used in a case that a program is transmitted via a network such as the Internet or a communication line such as a telephone line, and a recording medium that stores a program for a certain period of time, for example, a volatile memory in a computer system that becomes a server or a client in the above case. Besides, the above-mentioned program may be a program configured to realize some of the functions described above, and may also be configured to realize the functions described above in combination with a program already recorded in the computer system.

Further, the various functional blocks or various features of the apparatus used in the embodiments described above may be installed or performed by an electrical circuit, i.e., typically an integrated circuit or a plurality of integrated circuits. Electrical circuits designed to execute the functions described in the present description may include general-purpose processors, digital signal processors (DSPs), application specific integrated circuits (ASICs), field programmable gate arrays (FPGAs) or other programmable logic devices, discrete gates or transistor logic, discrete hardware components, or any combination of the above. The general-purpose processor may be a microprocessor, and alternatively, the general-purpose processor may be any conventional processor, controller, microcontroller, or state machine. The general-purpose processor or each of the above-mentioned circuits may include a digital circuit, or may include an analog circuit. Further, due to the advance in semiconductor technology, a circuit integration technology may appear to replace the current integration circuit technology, and an integrated circuit based on such a technology may also be used.

In addition, the present invention is not limited to the above-described embodiments. In the embodiments, apparatuses have been described as an example, but the invention of the present application is not limited to these apparatuses, and is applicable to a terminal apparatus, a communication apparatus, or a fixed-type or a stationary-type electronic apparatus installed indoors or outdoors, for example, an AV apparatus, a kitchen apparatus, a cleaning or washing machine, an air-conditioning apparatus, office equipment, a vending machine, other household apparatuses, or the like.

The embodiments of the present invention have been described in detail with reference to the accompanying drawings, but the specific configuration is not limited to the embodiments and may further include design modification and the like without departing from the scope of the present invention. Further, various modifications can be made within the scope of the present invention defined by claims, and embodiments that are made by suitably combining technical means disclosed according to the different embodiments are also included in the technical scope of the present invention. Further, a configuration in which constituent elements, described in the above embodiments and having mutually the same effects, are substituted for one another may also be included in the technical scope of the present invention.

## Claims

1. A terminal apparatus communicating with a base station apparatus, comprising:
a reception unit and a processing unit, wherein:
the reception unit is configured to receive an RRC reconfiguration message including a radio bearer configuration information element from the base station apparatus;
the processing unit is configured to:
establish an SDAP entity, based on that a value of a radio bearer identifier information element included in the radio bearer configuration information element does not exist in the terminal apparatus and that the radio bearer configuration information element includes an SDAP configuration information element, when the SDAP entity for a PDU session information element included in the SDAP configuration information element does not exist;
determine whether a data radio bearer for the PDU session information element existed before the RRC reconfiguration message is received;
notify a higher layer that a user-plane resource for a PDU session corresponding to a value of the PDU session information element has been configured based on that the data radio bearer for the PDU session information element did not exist before the RRC reconfiguration message is received; and
associate the established SDAP entity with the PDU session based on that the data radio bearer for the PDU session information element existed before the RRC reconfiguration message is received.

2. A base station apparatus communicating with a terminal apparatus, comprising:
a transmission unit and a processing unit, wherein:
the transmission unit is configured to transmit an RRC reconfiguration message including a radio bearer configuration information element to the terminal apparatus;
the processing unit is configured to include the radio bearer configuration information element in the RRC reconfiguration message and to cause the terminal apparatus to:
establish an SDAP entity, based on that a value of a radio bearer identifier information element included in the radio bearer configuration information element does not exist in the terminal apparatus and that the radio bearer configuration information element includes an SDAP configuration information element, when the SDAP entity for a PDU session information element included in the SDAP configuration information element does not exist;
determine whether a data radio bearer for the PDU session information element existed before the RRC reconfiguration message is received;
notify a higher layer that a user-plane resource for a PDU session corresponding to a value of the PDU session information element has been configured based on that the data radio bearer for the PDU session information element did not exist before the RRC reconfiguration message is received; and
associate the established SDAP entity with the PDU session based on that the data radio bearer for the PDU session information element existed before the RRC reconfiguration message is received.

3. A method for a terminal apparatus communicating with a base station apparatus, comprising:
receiving an RRC reconfiguration message including a radio bearer configuration information element from the base station apparatus;
establishing an SDAP entity, based on that a value of a radio bearer identifier information element included in the radio bearer configuration information element does not exist in the terminal apparatus and that the radio bearer configuration information element includes an SDAP configuration information element, when the SDAP entity for a PDU session information element included in the SDAP configuration information element does not exist;
determining whether a data radio bearer for the PDU session information element existed before the RRC reconfiguration message is received;
notifying a higher layer that a user-plane resource for a PDU session corresponding to a value of the PDU session information element has been configured based on that the data radio bearer for the PDU session information element did not exist before the RRC reconfiguration message is received; and
associating the established SDAP entity with the PDU session based on that the data radio bearer for the PDU session information element existed before the RRC reconfiguration message is received.

4. A method for a base station apparatus communicating with a terminal apparatus, comprising:
transmitting an RRC reconfiguration message including a radio bearer configuration information element to the terminal apparatus;
including the radio bearer configuration information element in the RRC reconfiguration message and causing the terminal apparatus to:
establish an SDAP entity, based on that a value of a radio bearer identifier information element included in the radio bearer configuration information element does not exist in the terminal apparatus and that the radio bearer configuration information element includes an SDAP configuration information element, when the SDAP entity for a PDU session information element included in the SDAP configuration information element does not exist;
determine whether a data radio bearer for the PDU session information element existed before the RRC reconfiguration message is received;
notify a higher layer that a user-plane resource for a PDU session corresponding to a value of the PDU session information element has been configured based on that the data radio bearer for the PDU session information element did not exist before the RRC reconfiguration message is received; and
associate the established SDAP entity with the PDU session based on that the data radio bearer for the PDU session information element existed before the RRC reconfiguration message is received.
